# EUROPEAN PATENT APPLICATION

(11) **EP 1 342 602 A1**
(43) Date of publication of application: **10.09.2003**
(21) Application number: 03075634.0
(22) Date of filing: 04.03.2003
(51) Int. Cl.: B60J 11/00

(54) **Improved protection system for vehicles**

(30) Priority: 06.03.2002 IT MI20020461
(71) Applicant: Confezioni Andrea S.r.l., 21100 Varese (IT)
(72) Inventor: Tavelli, Andrea, 21010 Montegrino Valtravaglia (Varese) (IT)
(74) Representative: Coppo, Alessandro

(57) **Abstract**

A protection system for vehicles (12) comprising a waterproof and breathable covering cloth (10) sewn into a bag (11), made of a waterproof material as well; the bag (11) carries a side clamp (14) connected to a support member (15) for fixing to the vehicle body (12), so that when the vehicle (12) is covered, the cloth (10) does not lose its bag (11) and does not slip on the body. In this way, the operations for covering the vehicle (12) and removing the protective cloth (10) are made easier.

## Description

The present invention relates to an improved protection system for vehicles.

Various types of vehicle covering cloths are currently known, which are realised in a single piece or in more portions, used for protection purposes in order to protect the car body from weather effects, vandalism actions and accidental collisions, both when the vehicle is parked outdoor and when it is necessary to move it to bring it from the manufacturer's factory to the dealer.

Moreover, covering cloths are also used to protect the vehicle body during servicing and/or fixing at a workshop, to prevent any damages caused by scratches, oil, grease or else.

In any case, the operations of covering and then removing the protective cloth from the vehicle body are always very difficult, both for practical difficulties in arranging the cloth onto the vehicle without making it slip from one or more sides (especially if it is a motor vehicle and the operation is carried out by a single individual), and for the need of containing the cloth so as to carry it easily. Finally, the current disadvantages arising from the possibility that the user may become dirty on the covering cloth while covering the vehicle or removing it from the vehicle body are not to be underestimated.

The object of the present invention therefore is that of providing an improved protection system for vehicles which should obviate to the disadvantages mentioned above, and in particular, that of realising a highly reliable, practical and easy to use protection system.

Another object of the present invention is that of providing an improved protection system for vehicles which should allow carrying out the operations of covering the vehicle and removing the cloth from the body in a quick and practical manner without problems arising from undesired movements of the same onto the vehicle body and maintaining, at the same time, a high protection from any accidental damages that may be caused to the above body.

A further object of the present invention is that of realising an improved protection system for vehicles substantially easy to use and inexpensive compared to known structures, thanks to the advantages obtained.

Such objects are achieved by an improved protection system for vehicles according to claim 1, to which reference shall be made for shortness.

Advantageously, the covering cloth object of the present invention can be realised in a single piece or can optionally consist of various pieces sewn together, which may be open on at least one of the sides, so as to easily access the vehicle underneath area.

To this regard it should be noted that the protection system under discussion can be indifferently used for cars or motorcycles, and that in the case of cars it is possible to provide for the realisation of a removable cloth portion at the driver's side door, or the opening of a cloth portion at the vehicle engine compartment housing or at the closing cap of the vehicle fuel filler.

Further objects and advantages of the present invention will appear more clearly from the following description and attached drawings, provided by way of a non-limiting example, wherein:
- Figure 1 shows a first step of application to a car of the improved protection system for vehicles, according to the present invention;
- Figure 1A shows an enlarged detail of figure 1;
- Figure 2 shows a second step of application of the improved protection system for vehicles, according to the invention;
- Figure 3 shows a third step of application of the improved protection system for vehicles, object of the present invention;
- Figures 4 and 4A show the final steps of the application of the covering cloth to a car, according to the protection system object of the present invention.

With reference to the above figures, reference numeral 10 generically indicates a protective cloth for vehicles (cars or motor vehicles), associated by sewing at least one end hem to a containment bag 11; the attached figures show an example of car, schematically indicated with reference numeral 12, onto which cloth 10 is arranged, according to the methods of the improved protection system object of the present invention.

Bag 11 is made of a breathable and waterproof material for evaporation, and it is univocally associated to each covering cloth 10 so that no cloth 10 may lose its bag 11 and so that the same cloth 10 may be folded and inserted into such case for carriage.

Cloth 10 may consist of an inside layer, preferably made of a non-scratch soft material (such as spunbonded fabric or TNT, polyester, viscose and needle-punched fabric in general), and of an outside layer, usually comprising waterproof plastic material, such as polythene, polyethylene and the like, or biodegradable materials.

In particular, it is advantageously possible to use polyethylene since it is highly resistant to ultraviolet rays and is thermo-retractable.

Of course, the type of material used as component of the layers forming cloth 10, as well as its weight and thickness, may change according to the type of vehicle and the duration of the protection.

According to the methods for applying the covering cloth 10 to the body of vehicle 12, bag 11 containing cloth 10 is fixed to the front or rear windscreen 13, or onto the body itself, or at projecting portions of the above body, such as for example the rearview mirrors of vehicle 12.

Bag 10 is preferably applied to the inside or outside body of vehicle 12 by in se known fixing means, such as suction cups, hooks, Velcro or magnets.

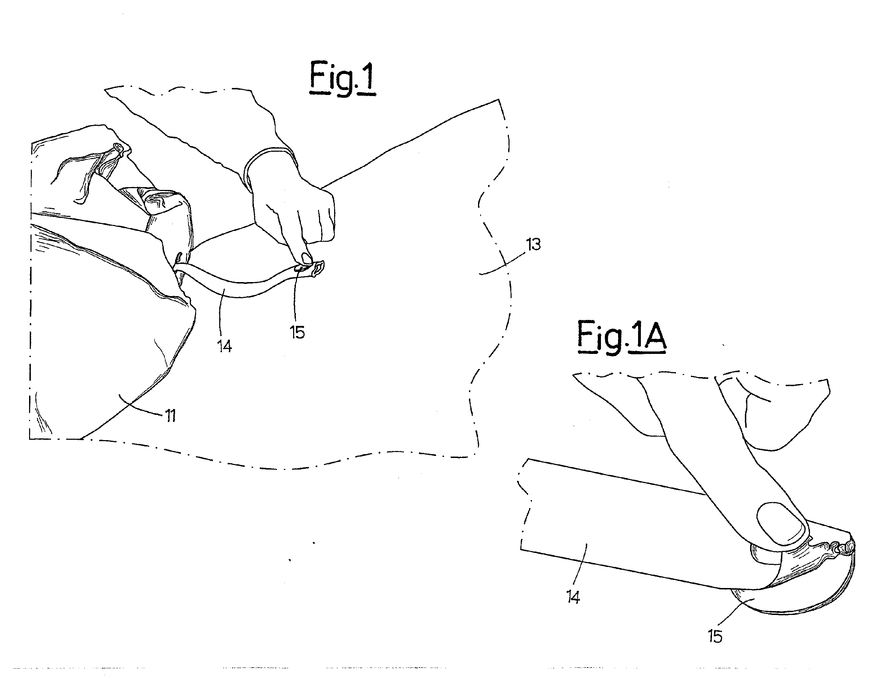

In preferred and exemplifying but non-limiting embodiments of the invention, bag 11 is secured into position on the front windscreen 13, as shown in the attached figures 1 and 1A, by a support and lock member comprising a clamp 14 sewn to bag 11 and exhibiting a fixing suction cup 15 at its end; in this way, besides the body of vehicle 12, the fixing means can be advantageously associated also to the glass surfaces of the car.

Moreover, such support and lock member has a very flexible use, since for its removable fixing to the car it only requires a flat surface of substantially small size.

The fixing member to car 12 can be realised by a first member, consisting of suction cup 15, wherein there is buried a substantially cylindrical pin that is associated to the car body, and a second member, removably connected to the first member and shaped in such a way that the fabric of clamp 14 is interposed between the above first and second members.

In this way, the connection system between suction cup 15 and the cylindrical pin (not shown in the attached figures) allows avoiding the need of holes on suction cup 15 for making the pin protrude, so as to obtain a firm connection and an excellent seal of suction cup 15 on the body and/or on the glasses of vehicle 12.

Preferably, the second element of said lock member can consist of a button, into which there is buried a substantially cylindrical seat, adapted for being coupled with the cylindrical pin, so that suction cup and button may be coupled in a very firm manner.

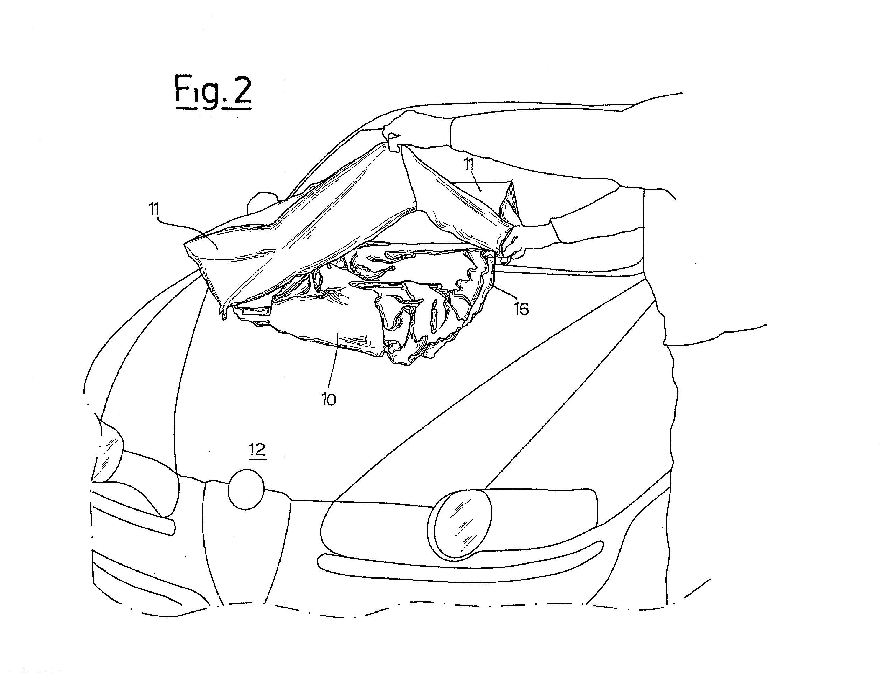

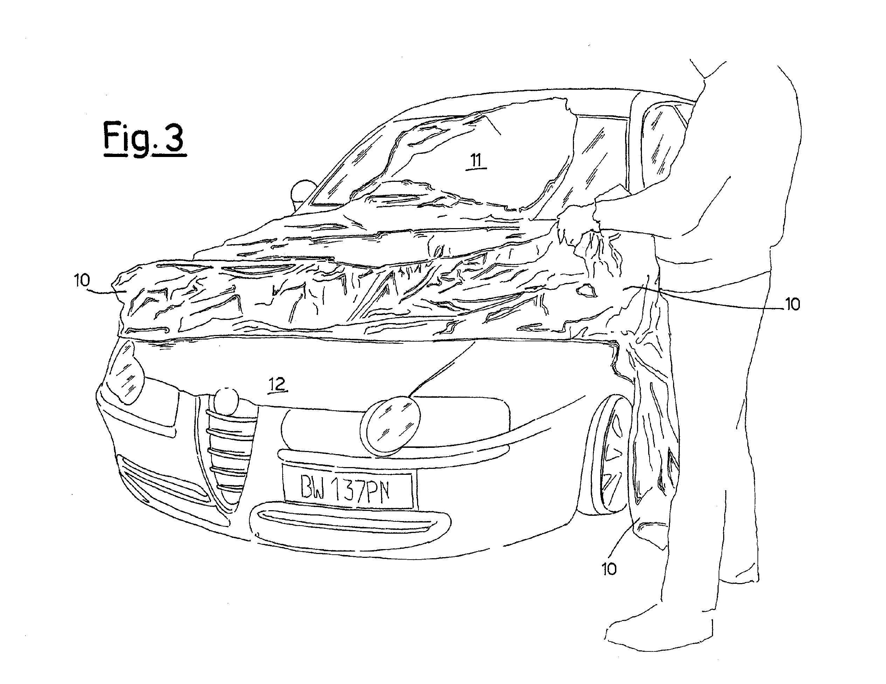

With particular reference to figures 2 and 3, according to a further step of application of the protective cloth 10 according to the present invention, at this point it is possible to open a zip fastener 16 or other means for closing bag 11, so as to extract the covering cloth 10 and lay it onto the body of car 12.

The operation of covering car 12 therefore is much easier than the conventional methods, since there is no risk that cloth 10 may slip along the car body, thanks to the hooking system determined by the application of suction cup 15 onto the body or windscreen 13 of the vehicle (to this regard, reference shall be made to the application step shown in detail in figure 3).

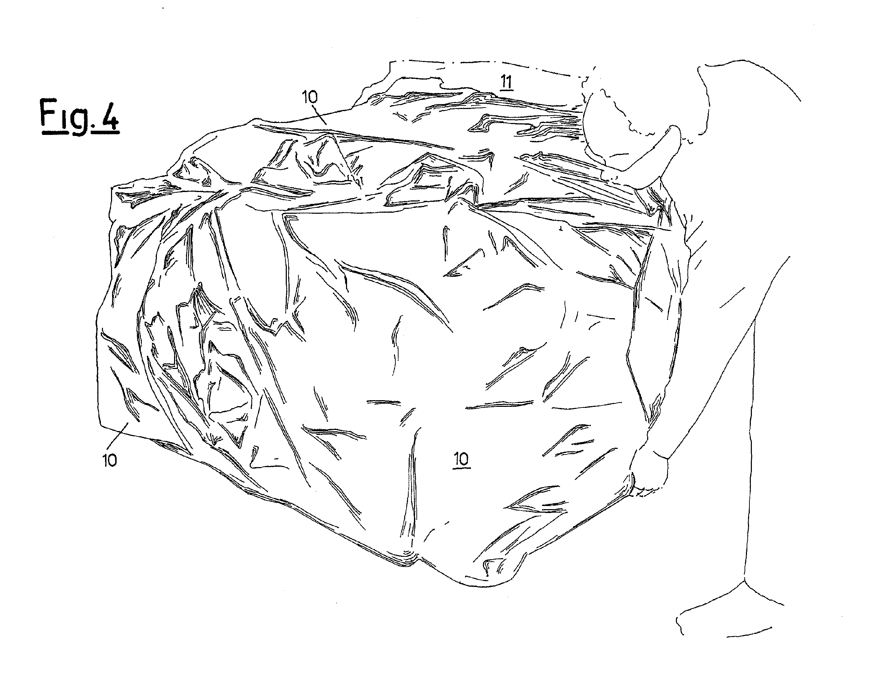

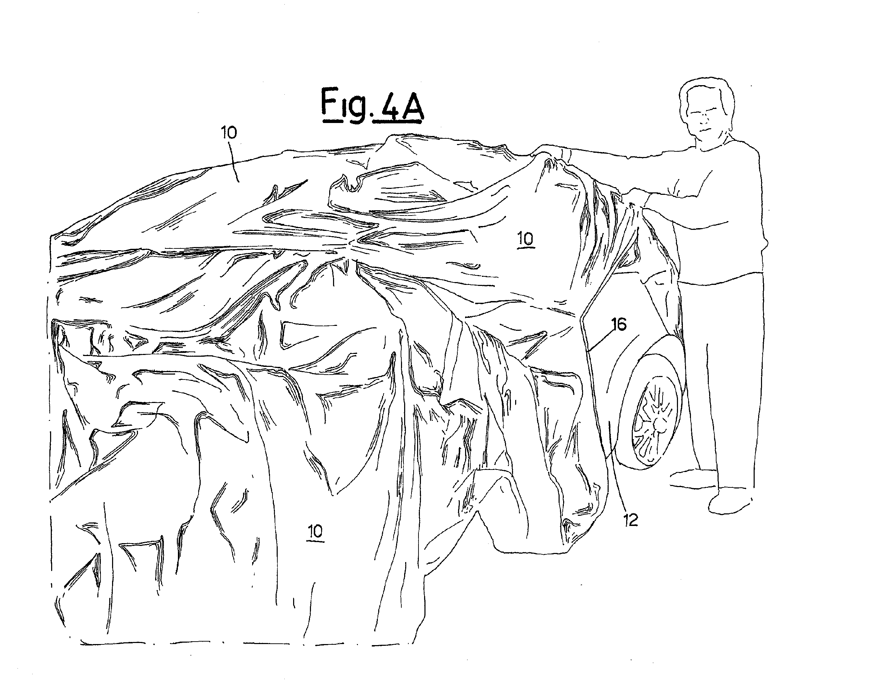

Moreover, cloth 10 is realised with a front elastic that allows fixing it under the vehicle chassis, as clearly illustrated in figure 4; moreover, an elastic or small cord (of the "coulisse" type) can be provided on the bottom of the side of cloth 10, and/or a zip fastener arranged on the front or rear side according to the models of the vehicles to be protected, closed and locked also in this case by known fixing systems, such as Velcro, buttons or hooks, in order to facilitate the covering of vehicle 12 and the removal of cloth 10.

If the vehicle geometry allows it, portions of cloth 10 may be folded into the driver compartment and/or engine compartment and be held by hooks, magnets, suction cups and other suitable locking elements; in any case, in general, the entire cloth 10 is secured to the bottom of car 12 by suitable locking systems such as suction cups, magnets, hooks, elastics, small cords, tapes or else, according to the geometry and to the structural features of the vehicle, and laid into vehicle 12, as shown in detail in figure 4A.

Moreover, it is possible to provide a series of holes in fixed zones of cloth 10 for specific functions of the same, for example at the car front air inlets, front and side grids, and/or rear exhaust pipes, so as to favour the air recirculation and the relevant cooling into the engine and the exit of any dampness accumulated inside cloth 10.

For a proper wearability of cloth 10 onto car 12, moreover, each cloth 10 may be realised with well determined geometric and structural features according to every type of vehicle; this allows avoiding any vibration of cloth 10 and possible abrasions to the body of the vehicle itself.

It has been therefore noted that thanks to the locking of bag 11 in a predefined position, it is possible to obtain a particularly firm and safe fixing of cloth 10, which does not tend to move or slip on the body of vehicle 12 during the covering or removal operations.

Moreover, also the removal from vehicle 12 and the folding of cloth 10 into bag 11 are considerably facilitated and advantageous for the user.

In fact, to remove clamp 14 from the covered portion of body or glass, in a simple and quick way after use, it is sufficient to pull the above clamp 14 upwards so as to automatically remove suction cup 15 as well.

After such operation or before it, it is sufficient to fold cloth 10 and put it into the case consisting of bag 11 laying on top of car 12.

In this way, any possibility that the user may become dirty during the removal of cloth 10 by inadvertently leaning onto the covering cloth is avoided, since the same is folded and automatically put into case 11.

The features of the improved protection system for vehicles object of the present invention, as well as its advantages, clearly appear from the above description.

Finally, it is clear that several changes can be made to the protection system under discussion, without departing from the novelty principles of the inventive idea, and it is also clear that in the practical embodiment of the invention, the materials, shapes and dimensions of the illustrated details may be of any type according to the requirements, and the same may be replaced with other technically equivalent details.

## Claims

1. Improved protection system for vehicles (12) comprising a waterproof or breathable covering and protective cloth (10) associated to a containment element (11), **characterised in that** at least one support means (15) allows fixing said cloth (10) to at least one portion of the vehicle (12), so that during the step of covering said vehicle (12), said protective cloth (10) does not slip onto the body and totally or partially fall onto the ground, thereby becoming dirty or damaged, in order to facilitate the operations for covering the vehicle (12) and removing the cloth (10) by the user.

2. Improved protection system according to claim 1, **characterised in that** said covering cloth (10) is associated to a containment element (11) and jointed to it in correspondence of at least one portion.

3. Improved protection system according to claim 1, **characterised in that** said containment element (11) of the cloth (10) is fixable in correspondence of at least one portion of body, either external or internal, of said vehicle (12).

4. Improved protection system according to claim 3, **characterised in that** said containment element (11) is fixable to the front (13) or rear windscreen or at protruding portions of the body of said vehicle (12).

5. Improved protection system according to claim 3, **characterised in that** said fixing of the containment element (11) is made by support members, such as suction cups, hooks, Velcro or magnets.

6. Improved protection system according to claim 5, **characterised in that** said containment element (11) or said cloth (10) exhibit a separate extension or at least a clamp (14), provided in correspondence of at least one end with at least one fixing suction cup (15), wherein there is buried a substantially cylindrical pin, which is associated to the body of the vehicle (12), and at least one button, inside which there is buried a substantially cylindrical seat, adapted for being removably coupled to said cylindrical pin.

7. Improved protection system according to claim 1, **characterised in that** said containment element (11) is provided with opening and closing means for inserting and removing said cloth (10), which is therefore laid onto the body of the vehicle (12).

8. Improved protection system according to claim 1, **characterised in that** said cloth (10) exhibits at least one fixing elastic, arranged at the side and/or front of the vehicle (12), according to the geometry and to the structural features of the body of said vehicle (12).

9. Improved protection system according to claim 1, **characterised in that** said covering cloth (10) may exhibit a series of holes adapted for favouring the air recirculation and the exit of dampness that may have accumulated therein.
